# EUROPÄISCHE PATENTSCHRIFT

(11) **EP 4 374 480 B1**
(45) Veröffentlichungstag und Bekanntmachung des Hinweises auf die Patenterteilung: **23.09.2026**
(21) Anmeldenummer: 22755111.6
(22) Anmeldetag: 21.07.2022
(51) Int. Cl.: H02K 3/52, H02K 15/022

(54) **ROTOR MIT NUTKEIL, ELEKTRISCHE MASCHINE, KRAFTFAHRZEUG UND VERFAHREN ZUR HERSTELLUNG EINES ROTORS**
ROTOR HAVING A SLOT WEDGE, ELECTRIC MACHINE, MOTOR VEHICLE, AND METHOD FOR PRODUCING A ROTOR
ROTOR AVEC CALE D'ENCOCHE, MACHINE ÉLECTRIQUE, VÉHICULE À MOTEUR ET PROCÉDÉ DE FABRICATION D'UN ROTOR

(30) Priorität: 23.07.2021 DE 102021119142
(43) Veröffentlichungstag der Anmeldung: 29.05.2024
(73) Patentinhaber: Schaeffler Technologies AG & Co. KG, 91074 Herzogenaurach (DE)
(72) Erfinder: GRAUVOGL, Dominik, 80687 München (DE); STAUDER, Peter, 80687 München (DE)
(74) Vertreter: Schaeffler Technologies
(86) Internationale Anmeldenummer: PCT/EP2022/070470
(87) Internationale Veröffentlichungsnummer: WO 2023/001954

(56) Entgegenhaltungen:
- DE-A1- 102019 217 464
- JP-A- S5 577 341
- JP-A- S57 189 541
- US-A- 2 390 130
- US-A1- 2003 184 180
- US-A1- 2017 353 092

## Beschreibung

Die Erfindung betrifft einen Rotor nach Anspruch 1. Die Erfindung betrifft zudem eine elektrische Maschine mit dem erfindungsgemäßen Rotor. Gegenstand der Erfindung ist überdies ein Kraftfahrzeug mit der erfindungsgemäßen elektrischen Maschine. Ferner betrifft die Erfindung ein Verfahren zur Herstellung des erfindungsgemäßen Rotors.

Rotoren für elektrische Maschinen von Kraftfahrzeugen, insbesondere von Achsantrieben, sind grundsätzlich bekannt. Die Rotoren können entweder permanenterregt sein, oder über eine Wicklung fremderregt werden. Durch die begrenzte Verfügbarkeit von seltenen Erden für die Magnete der permanenterregten Rotoren und dem erhöhten Absatz von zumindest teilweise elektrisch angetriebenen Fahrzeugen, gewinnen die fremderregten elektrischen Maschinen zunehmend an Bedeutung. Ein Aspekt bei der Herstellung von fremderregten Rotoren ist unter anderem die Anordnung der Wicklung auf den Polzähnen der Rotoren. Im Zuge einer Rotation des Rotors wirken Fliehkräfte auf die Wicklung, so dass sich diese verlagern und schlimmstenfalls lösen kann.

In der US 2003/184180 A1 ist ein Nutkeil für eine elektrische Maschine gezeigt, welcher auf einer der Wicklung zugewandten Seite ein nachgiebiges Material aufweist.

Aus der US 2017353092 A1 jst ein fremderregter Rotor mit einem Nutkeil gezeigt, wobei der Nutkeil eine Öffnung aufweist, durch die ein Luftkanal geführt ist.

Die US2390130 A beschreibt Kühlmittel für eine dynamoelektrische Maschine.

Eine Aufgabe der Erfindung liegt darin, einen Rotor für eine fremderregte elektrische Maschine eines Kraftfahrzeugs bereitzustellen, bei dem die Rotorwicklung lagesicher und schonend auf den Polzähnen des Rotors fixiert werden kann.

Diese Aufgabe wird durch den Gegenstand der unabhängigen Patentansprüche gelöst. Bevorzugte Weiterbildungen der Erfindung sind Gegenstand der Unteransprüche, der nachstehenden Beschreibung sowie den Zeichnungen. Dabei kann jedes beschriebene und/oder gezeigte Merkmal sowohl einzeln als auch in Kombination einen Aspekt der Erfindung darstellen, sofern sich nicht explizit etwas Gegenteiliges aus der Beschreibung ergibt.

Die Erfindung betrifft einen Rotor für eine fremderregte elektrische Maschine eines Kraftfahrzeugs, aufweisend ein ringförmig ausgebildetes Joch mit einer in radialer Richtung des Jochs nach außen gerichteten Jochaußenseite, wobei auf der Jochaußenseite eine Mehrzahl von Polzähnen in Umfangsrichtung des Jochs zueinander beabstandet angeordnet und/oder ausgebildet sind, jeder Polzahn einen Polschaft und einen Polschuh aufweisen, wobei der Polschaft zwischen der Jochaußenseite und dem Polschuh ausgebildet ist, auf jedem Polschaft eine Rotorwicklung angeordnet ist, und in einer Nut zwischen der Rotorwicklung zweier benachbarter Polzähne ein Nutkeil angeordnet ist, wobei der Nutkeil auf einer der jeweiligen Rotorwicklung zugewandten Außenseite eine Schicht aus einem Elastomer aufweist, gegen die die Rotorwicklung zumindest teilweise und/oder abschnittsweise anliegt, wobei der Nutkeil eine im Querschnitt dreieckförmige und/oder keilförmige Grundform aufweist, wobei eine Spitze des keilförmigen Nutkeils in Richtung der Jochaußenseite gerichtet ist, durch den Nutkeil in Längsrichtung des Rotors eine randgeschlossene Öffnung verläuft, und die Öffnung zumindest abschnittsweise mit einem expandierfähigen Material verfüllt ist, wodurch die Schicht aus dem Elastomer an die Rotorwicklung angepresst wird.

Mit anderen Worten ist gemäß dem ersten Aspekt der Erfindung vorgesehen, dass ein Rotor für eine fremderregte elektrische Maschine eines Kraftfahrzeugs bereitgestellt wird. Die elektrische Maschine ist vorzugsweise in einem Antriebsstrang, insbesondere in einem Achsantrieb eines zumindest teilweise elektrisch angetriebenen Kraftfahrzeugs angeordnet.

Der Rotor weist ein ringförmig ausgebildetes Joch auf. Auf einer in radialer Richtung des Jochs bzw. des Rotors ausgebildeten Jochaußenseite des Jochs ist eine Mehrzahl von Polzähnen angeordnet. Eine Mehrzahl von Polzähnen bedeutet wenigstens zwei Polzähne. Vorzugsweise jedoch mehr als zwei Polzähne, insbesondere vier Polzähne, sechs Polzähne oder acht Polzähne. Die Polzähne sind in Umfangsrichtung des Jochs zueinander beabstandet ausgebildet und/oder angeordnet. Jeder Polzahn weist einen Polschaft und einen an den Polschaft angrenzenden Polschuh auf. Der Polschaft ist zwischen der Jochaußenseite und dem Polschuh ausgebildet. Auf jedem Polschaft ist eine bestrombare Rotorwicklung angeordnet bzw. aufgewickelt. Zwischen der Rotorwicklung zweier benachbarter Polzähne ist eine Nut ausgebildet. In diese Nut ist ein Nutkeil, der auch als Spacer bezeichnet werden kann, angeordnet. Der Nutkeil dient dazu, die auf dem Polschaft angeordnete Rotorwicklung in dessen Lage auf dem Polschaft zu fixieren. Auf einer Außenseite des Nutkeils, die der Rotorwicklung zugewandt ist, ist eine Schicht aus einem Elastomer angeordnet und/oder ausgebildet. In diese Schicht aus dem Elastomer ist die Rotorwicklung zumindest teilweise und/oder abschnittsweise eingepresst, so dass sich eine Verzahnung zwischen dem Nutkeil bzw. der Schicht aus dem Elastomer des Nutkeils und der Rotorwicklung ergibt. Auf diese Weise kann die Lagefixierung der Rotorwicklung erhöht werden. Zudem können kontaktbedingte Beschädigungen zwischen dem Nutkeil und der Rotorwicklung aufgrund der Schicht aus dem Elastomer reduziert werden, so dass eine schonende Lagefixierung der Rotorwicklung auf den Polzähnen ermöglicht werden kann.

Erfindungsgemäß ist vorgesehen, dass der Nutkeil eine im Querschnitt dreieckförmige und/oder keilförmige Grundform aufweist, wobei eine Spitze des keilförmigen Nutkeils in Richtung der Jochaußenseite gerichtet ist, durch den Nutkeil in Längsrichtung des Rotors eine randgeschlossene Öffnung verläuft, und die Öffnung zumindest abschnittsweise mit einem expandierfähigen Material verfüllt ist. Zwischen der Öffnung und der Nutaußenseite weist der Nutkeil somit Keilschenkel auf. Durch das Verfüllen der im Querschnitt randgeschlossenen Öffnung mit dem expandierfähigen Material werden die Keilschenkel in Richtung der Rotorwicklung verformt, wodurch die Schicht aus dem Elastomer an die Rotorwicklung angepresst wird. Somit kann beispielsweise der Nutkeil mit einem gewissen Spiel in die Nut zwischen der Rotorwicklung benachbarter Polzähne angeordnet werden, wodurch eine Beschädigung der Rotorwicklung durch das Einsetzten des Nutkeils in die Nut weiter reduziert werden kann.

Eine vorteilhafte Weiterbildung der Erfindung liegt darin, dass das Elastomer ein Kautschukmaterial ist und/oder zumindest teilwiese Kautschuk aufweist. Der Kautschuk kann ein Naturkautschuk oder ein synthetisch hergestellter Kautschuk sein. Ein Kautschuk ist ein bevorzugtes Ausgangsmaterial für elastische Materialien und/oder elastische Stoffe, die gummiartige Eigenschaften aufweisen können.

In diesem Zusammenhang liegt eine bevorzugte Ausgestaltung der Erfindung darin, dass das Kautschukmaterial ein Ethylen-Propylen-Dien-Kautschuk (EPDM) oder ein Butylkautschuk (IIR) ist. Ethylen-Propylen-Dien-Kautschuke und Butylkautschuke haben eine erhöhte Temperaturbeständigkeit was von Vorteil in der Anwendung von elektrischen Maschinen ist, da diese während des Betriebs erhöhte Temperaturen erfahren können. Zudem kann die Schicht aus dem Elastomer, aufweisend beispielsweise Ethylen-Propylen-Dien-Kautschuke, vorzugsweise auf den Nutkeil aufvulkanisiert oder aufgeklebt werden.

Eine vorteilhafte Weiterbildung der Erfindung liegt darin, dass der Nutkeil aus Kunststoff ausgebildet ist. Nutkeile aus Kunststoff sind preiswert herstellbar und weisen ein reduziertes Gewicht auf. Der Kunststoff kann ein thermoplastischer oder duroplastischer Kunststoff sein. Besonders bevorzugt kann vorgesehen sind, dass der Kunststoff zumindest teilweise und/oder abschnittsweise mit Fasern, insbesondere mit Karbonfasern und/oder Glasfasern, verstärkt ist. Auf diese Weise kann die strukturelle Steifigkeit des Nutkeils gezielt erhöht und das Gewicht des Nutkeils bzw. des Rotors reduziert werden.

Eine bevorzugte Ausgestaltung der Erfindung liegt darin, dass die Öffnung im Querschnitt des Nutkeils eine im Wesentlichen dreieckförmige Ausgestaltung aufweist. Im Wesentlichen bedeutet, dass die Querschnittsfläche der Öffnung in etwa der Außenkontur des Nutkeils in dessen Querschnitt entspricht, wobei die Ecken jedoch ausgerundet sind. Die Öffnung wird von einer inneren Wandungsfläche des Nutkeils umgeben. Im Bereich der Keilschenkel verläuft die innere Wandungsfläche zumindest abschnittsweise parallel zur Außenseite. Somit können durch die Geometrie der Öffnung und auch der Wandstärke der Keilschenkel gezielt die Bereiche ausgebildet werden, die sich durch das in die Öffnung eingebrachte Material nach außen verformen sollen, um die Schicht aus dem Elastomer an die Rotorwicklung anzupressen.

In einer vorteilhaften Weiterbildung der Erfindung ist vorgesehen, dass sich ein Nutkeilende des Nutkeils zumindest abschnittsweise gegen eine Polschuhinnenfläche abstützt. Vorzugsweise wird der Nutkeil in Längsrichtung des Rotors in die Nut zwischen den Polzähnen eingeschoben. Auf diese Weise kann vermieden werden, dass der Nutkeil unter Fliehkrafteinfluss in radialer Richtung des Rotors aus der Nut rutscht.

Vorteilhaft ist weiter vorgesehen, dass der Nutkeil auf dessen der Jochaußenseite zugewandten Seite eine Aufweitung aufweist, die eine der Jochaußenseite zugewandte Innenseite der Rotorwicklung zumindest abschnittsweise hintergreift. Dadurch, dass der Nutkeil die Rotorwicklung auf dem Polschaft anpresst und die Rotorwicklung somit unverschiebbar auf dem Polschaft gehalten ist, und die Aufweitung des Nutkeils die Innenseite der Rotorwicklung hintergreift, wird der Nutkeil selbstsichernd in der Nut fixiert.

Grundsätzlich kann das expandierfähige Material ein Material sein, dass dazu eingerichtet ist, in die Öffnung des Nutkeils eingebracht zu werden, das eigene Volumen zu vergrößern, auszuhärten, temperaturbeständig und formstabil zu sein. Hierzu ist vorteilhaft vorgesehen, dass das expandierfähige Material ein Polymer ist und/oder ein Kunststoff und/oder Kunstharz, insbesondere eine Polyurethanschaum.

In einem zweiten Aspekt betrifft die Erfindung eine elektrische Maschine mit dem erfindungsgemäßen Rotor.

Die elektrische Maschine ist vorzugsweise dazu eingerichtet und/oder ausgebildet in einem Kraftfahrzeug, insbesondere in einem Traktionsantrieb eines zumindest teilweise elektrisch angetriebenen Kraftfahrzeugs, angeordnet und betrieben zu werden.

In einem dritten Aspekt betrifft die Erfindung ein Kraftfahrzeug mit der erfindungsgemäßen elektrischen Maschine.

Das Kraftfahrzeug ist vorzugsweise ein zumindest teilweise elektrisch angetriebenes Kraftfahrzeug. Das Kraftfahrzeug weist einen Traktionsantrieb, insbesondere einen Achsantrieb, auf. Die elektrische Maschine ist Teil des Traktionsantriebs, über den das Kraftfahrzeug angetrieben werden kann.

In einem vierten Aspekt betrifft die Erfindung ein Verfahren zur Herstellung des erfindungsgemäßen Rotors, umfassend die Schritte:
- Bereitstellen eines Rotors mit einer Mehrzahl von zueinander beabstandet angeordneter Polzähne;
- Anordnung einer bestrombaren Rotorwicklung auf den jeweiligen Polzähnen;
- Einsetzen eines Nutkeils in eine Nut zwischen der Rotorwicklung zweier benachbarter Polzähne, wobei der Nutkeil auf einer der jeweiligen Rotorwicklung zugewandten Außenseite eine Schicht aus einem Elastomer aufweist, und die Rotorwicklung zumindest teilweise und/oder abschnittsweise in die Schicht aus dem Elastomer eingepresst wird wobei
- nach dem Einsetzen des Nutkeils in die Nut eine in Längsrichtung verlaufende Öffnung des Nutkeils mittels eines expandierfähigen Materials ausgefüllt wird, oder
- ein expandierfähiges Material vor der Anordnung des Nutkeils in der Nut bereits in der Öffnung angeordnet ist und erst nach dem Einsetzen des Nutkeils in die Nut aktiviert wird, wodurch das expandierfähige Material an Volumen zunimmt und sich in der Öffnung ausdehnt.

Demnach ist vorgesehen, dass die auf dem Polschaft angeordnete Rotorwicklung über den Nutkeil und der auf dem Nutkeil angeordneten Schicht aus dem Elastomer lagesicher fixiert wird.

Die Schicht aus dem Elastomer kann auf die Außenseite des Nutkeils vorzugsweise aufvulkanisiert, aufgesprüht, auflaminiert und/oder aufgeklebt werden, so dass diese vorzugsweise unverlierbar mit dem Nutkeil verbunden ist. Dies hat den Vorteil, dass beim Einsetzen des Nutkeils in die Nut nicht auch noch die Lage der Schicht aus dem Elastomer überprüft werden muss.

Der Nutkeil wird vorzugsweise in Längsrichtung des Rotors in die Nut zwischen den Polzähnen eingeschoben. Auf diese Weise kann der Nutkeil schonend platziert werden.

Es ist in einer ersten Alternative der Erfindung vorgesehen, dass nach dem Einsetzen des Nutkeils in die Nut eine in Längsrichtung verlaufende Öffnung des Nutkeils mittels eines expandierfähigen Materials ausgefüllt wird. Die Keilschenkel werden durch das expandierfähige Material zumindest abschnittsweise verformt bzw. nach außen gedrückt, so dass die Schicht aus dem Elastomer an die Rotorwicklung angepresst wird.

In einer zweiten Alternative der Erfindung ist vorgesehen, dass ein expandierfähiges Material vor der Anordnung des Nutkeils in der Nut bereits in der Öffnung angeordnet ist und erst nach dem Einsetzen des Nutkeils in die Nut aktiviert wird, wodurch das expandierfähige Material an Volumen zunimmt und sich in der Öffnung ausdehnt. Dies kann vorteilhaft für den Herstellungsablauf sein, da der Nutkeil bereits außerhalb des Rotors entsprechend vorbereitet werden kann.

Es sei bemerkt, dass sämtliche Merkmale, welche voranstehend und nachfolgend in Bezug auf einen Aspekt der vorliegenden Erfindung beschrieben sind, gleichermaßen für jeden anderen Aspekt der vorliegenden Erfindung gelten. Im Speziellen können sämtliche Merkmale des Rotors auch Merkmale der elektrischen Maschine, Merkmale des Kraftfahrzeugs und/oder auch Merkmale des Verfahrens sein. Dies gilt auch umgekehrt.

Weitere Merkmale und Vorteile der vorliegenden Erfindung ergeben sich aus den Unteransprüchen sowie den nachfolgenden Ausführungsbeispielen. Die Ausführungsbeispiele sind nicht einschränkend, sondern vielmehr als beispielhaft zu verstehen. Sie sollen den Fachmann in die Lage versetzen, die Erfindung auszuführen. Die Anmelderin behält sich vor, einzelne und/oder mehrere der in den Ausführungsbeispielen offenbarten Merkmale zum Gegenstand von Patentansprüchen zu machen oder solche Merkmale in bestehende Patentansprüche aufzunehmen. Die Ausführungsbeispiele werden anhand von Zeichnungen näher erläutert.

In diesen zeigen:
Fig. 1 einen Querschnitt durch einen Rotor im Bereich zwischen zwei Polzähnen,
Fig. 2 ein Kraftfahrzeug mit einer elektrischen Maschine,
Fig. 3 ein Verfahren zur Herstellung eines Rotors.

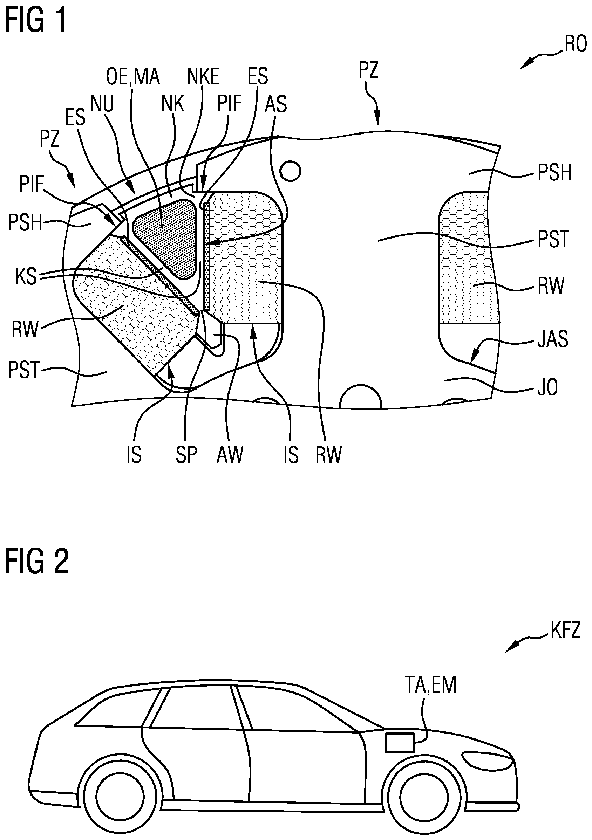

In Fig. 1 ist ein Querschnitt durch einen Rotor RO einer fremderregten elektrischen Maschine EM für ein Kraftfahrzeug KFZ gezeigt. Der Rotor RO weist ein ringförmig ausgebildetes Joch JO auf. Auf einer in radialer Richtung des Jochs JO bzw. des Rotors RO ausgebildeten Jochaußenseite JAS des Jochs JO ist eine Mehrzahl von Polzähnen PZ angeordnet. Die Polzähne PZ sind in Umfangsrichtung des Jochs JO zueinander beabstandet ausgebildet und/oder angeordnet.

Jeder Polzahn PZ weist einen Polschaft PST und einen an den Polschaft PST angrenzenden Polschuh PSH auf. Der Polschaft PST ist zwischen der Jochaußenseite JAS und dem Polschuh PSH ausgebildet. Auf jedem Polschaft PST ist eine bestrombare Rotorwicklung RW angeordnet bzw. aufgewickelt.

Zwischen der Rotorwicklung RW zweier benachbarter Polzähne ist eine Nut NU ausgebildet. In diese Nut NU ist ein Nutkeil NK, der auch als Spacer bezeichnet werden kann, angeordnet. Der Nutkeil NK dient dazu, die auf dem Polschaft PST angeordnete Rotorwicklung RW in dessen Lage auf dem Polschaft PST zu fixieren.

Auf einer Außenseite AS des Nutkeils NK, die der Rotorwicklung RW zugewandt ist, ist eine Schicht ES aus einem Elastomer angeordnet und/oder ausgebildet. In diese Schicht ES aus dem Elastomer ist die Rotorwicklung RW zumindest teilweise und/oder abschnittsweise eingepresst, so dass sich eine Verzahnung zwischen dem Nutkeil NK bzw. der Schicht ES aus dem Elastomer des Nutkeils NK und der Rotorwicklung RW ergibt. Auf diese Weise kann die Lagefixierung der Rotorwicklung RW erhöht werden. Zudem können kontaktbedingte Beschädigungen zwischen dem Nutkeil NK und der Rotorwicklung RW aufgrund der Schicht ES aus dem Elastomer reduziert werden, so dass eine schonende Lagefixierung der Rotorwicklung RW auf den Polzähnen PZ ermöglicht werden kann.

Weiterhin ist ersichtlich, dass der Nutkeil NK eine im Querschnitt dreieckförmige und/oder keilförmige Grundform aufweist, wobei eine Spitze SP des keilförmigen Nutkeils NK in Richtung Jochaußenseite JAS gerichtet ist. Durch den Nutkeil NK verläuft in dessen Längsrichtung eine randgeschlossene Öffnung OE, die zumindest abschnittsweise mit einem expandierfähigen Material MA verfüllt ist.

Zwischen der Öffnung OE und der Außenseite AS des Nutkeils NK weist der Nutkeil NK somit Keilschenkel KS auf. Durch das Verfüllen der im Querschnitt randgeschlossenen Öffnung OE mit dem expandierfähigen Material MA werden die Keilschenkel KS in Richtung der Rotorwicklung RW zumindest abschnittsweise verformt, wodurch die Schicht ES aus dem Elastomer an die Rotorwicklung RW angepresst wird. Somit kann beispielsweise der Nutkeil NK mit einem gewissen Spiel in die Nut NU zwischen der Rotorwicklung RW zweier benachbarter Polzähne PZ angeordnet werden, wodurch eine Beschädigung der Rotorwicklung RW durch das Einsetzten des Nutkeils NK in die Nut NU weiter reduziert werden kann. Zudem kann vorzugsweise durch das Verspannen des Nutkeils NK an die Rotorwicklung RW auf ein Vergießen der Rotorwicklung RW mit einem Vergussmaterial verzichtet werden. Die Rotorwicklung RW kann somit vergussfrei auf dem Polschaft PST angeordnet sein.

Der Nutkeil NK weist auf dessen der Jochaußenseite JAS zugewandten Seite eine Aufweitung AW auf, die eine der Jochaußenseite JAS zugewandte Innenseite IS der Rotorwicklung RW zumindest abschnittsweise hintergreift. Dadurch, dass der Nutkeil NK die Rotorwicklung RW auf den Polschaft PST anpresst und die Rotorwicklung RW somit unverschiebbar auf dem Polschaft PST gehalten ist, und die Aufweitung AW des Nutkeils NK die Innenseite IS der Rotorwicklung RW hintergreift, wird der Nutkeil NK selbstsichernd in der Nut NU fixiert.

Weiterhin ist ersichtlich, dass sich ein Nutkeilende NKE des Nutkeils NK zumindest abschnittsweise gegen eine Polschuhinnenfläche PIF abstützt. Das Nutkeilende NKE ist auf einem der Spitze SP des Nutkeils NK abgewandten Seite, also in radialer Richtung des Jochs JO nach außen gerichtet, ausgebildet. Eine maximale Breite des Nutkeils NK in Umfangsrichtung des Jochs JO ist breiter als ein kleinster Abstand zwischen zwei zueinander benachbarten Polschuhen PSH. Somit kann verhindert werden, dass unter Fliehkrafteinfluss der Nutkeil NK in radialer Richtung des Rotors RO aus der Nut NU rutscht.

In Fig. 2 ist ein Kraftfahrzeug KFZ mit einer Antriebseinrichtung, insbesondere einem Traktionsantrieb TA, gezeigt. Der Traktionsantrieb TA weist die fremderregte elektrische Maschine EM auf. In der elektrischen Maschine EM ist der Rotor RO, wie aus Fig. 1 bekannt, angeordnet.

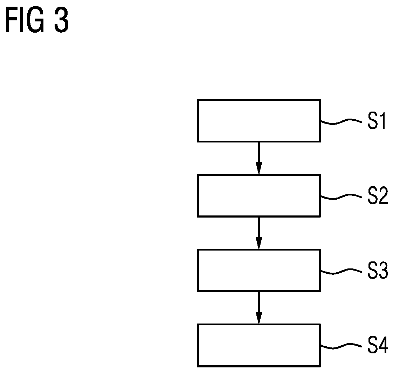

In Fig. 3 ist ein Verfahren zur Herstellung eines Rotors RO gezeigt.

In einem ersten Schritt S1 wird ein Rotor RO mit einer Mehrzahl von zueinander beabstandet angeordneter Polzähne PZ bereitgestellt.

In einem zweiten Schritt S2 wird eine bestrombare Rotorwicklung RW auf die jeweiligen Polzähne PZ aufgewickelt.

In einem dritten Schritt S3 wird der Nutkeil NK in eine Nut NU zwischen der Rotorwicklung RW zweier benachbarter Polzähne PZ angeordnet. Die Anordnung des Nutkeils NK in die Nut NU erfolgt dabei vorzugsweise in einer Richtung parallel zur Längsrichtung des Rotors RO. Anders angedrückt wird der Nutkeil NK in die Nut NU in Längsrichtung des Rotors RO eingeschoben. Der Nutkeil NK weist auf einer der jeweiligen Rotorwicklung RW zugewandten Außenseite AS eine Schicht ES aus einem Elastomer auf.

In einem vierten Schritt S4 ist vorgesehen, dass nach dem Einsetzen des Nutkeils NK in die Nut NU eine in Längsrichtung des Nutkeils NK verlaufende Öffnung OE des Nutkeils NK mittels eines expandierfähigen Materials MA ausgefüllt wird. Durch das expandierfähige Material MA werden die Keilschenkel KS des Nutkeils NK zumindest abschnittsweise verformt bzw. nach außen gedrückt, so dass die Schicht ES aus dem Elastomer an die Rotorwicklung RW angepresst wird.

## Patentansprüche

1. Rotor (RO) für eine fremderregte elektrische Maschine (EM) eines Kraftfahrzeugs (KFZ), aufweisend
ein ringförmig ausgebildetes Joch (JO) mit einer in radialer Richtung des Jochs (JO) nach außen gerichteten Jochaußenseite (JAS), wobei
auf der Jochaußenseite (JAS) eine Mehrzahl von Polzähnen (PZ) in Umfangsrichtung des Jochs (JO) zueinander beabstandet angeordnet und/oder ausgebildet sind,
jeder Polzahn (PZ) einen Polschaft (PST) und einen Polschuh (PSH) aufweisen, wobei der Polschaft (PST) zwischen der Jochaußenseite (JAS) und dem Polschuh (PSH) ausgebildet ist,
auf jedem Polschaft (PST) eine Rotorwicklung (RW) angeordnet ist, und
in einer Nut (NU) zwischen der Rotorwicklung (RW) zweier benachbarter Polzähne (PZ) ein Nutkeil (NK) angeordnet ist,
**dadurch gekennzeichnet, dass**
der Nutkeil (NK) auf einer der jeweiligen Rotorwicklung (RW) zugewandten Außenseite (AS) eine Schicht (ES) aus einem Elastomer aufweist, gegen die die Rotorwicklung (RW) zumindest teilweise und/oder abschnittsweise anliegt, wobei der Nutkeil (NK) eine im Querschnitt dreieckförmige und/oder keilförmige Grundform aufweist, wobei eine Spitze (SP) des keilförmigen Nutkeils (NK) in Richtung Jochaußenseite (JAS) gerichtet ist, durch den Nutkeil (NK) in Längsrichtung des Rotors (RO) eine randgeschlossene Öffnung (OE) verläuft, und die Öffnung (OE) zumindest abschnittsweise mit einem expandierfähigen Material (MA) verfüllt ist, wodurch die Schicht (ES) aus dem Elastomer an die Rotorwicklung (RW) angepresst wird.

2. Rotor nach Anspruch 1, **dadurch gekennzeichnet, dass** das Elastomer ein Kautschukmaterial ist und/oder zumindest teilwiese Kautschuk aufweist.

3. Rotor nach Anspruch 2, **dadurch gekennzeichnet, dass** das Kautschukmaterial ein Ethylen-Propylen-Dien-Kautschuke (EPDM) oder ein Butylkautschuk (IIR) ausgebildet ist.

4. Rotor nach einem der vorstehenden Ansprüche, **dadurch gekennzeichnet, dass** die Öffnung (OE) im Querschnitt eine im Wesentlichen dreieckförmige Ausgestaltung aufweist.

5. Rotor nach einem der vorstehenden Ansprüche, **dadurch gekennzeichnet, dass** der Nutkeil (NK) aus Kunststoff ausgebildet ist.

6. Rotor nach einem der vorstehenden Ansprüche, **dadurch gekennzeichnet, dass** sich ein Nutkeilende (NKE) des Nutkeils (NK) zumindest abschnittsweise gegen eine Polschuhinnenfläche (PIF) abstützt.

7. Rotor nach einem der vorstehenden Ansprüche, **dadurch gekennzeichnet, dass** der Nutkeil (NK) auf dessen der Jochaußenseite (JAS) zugewandten Seite eine Aufweitung (AW) aufweist, die die der Jochaußenseite (JAS) zugewandte Innenseite (IS) der Rotorwicklung (RW) zumindest abschnittsweise hintergreift.

8. Rotor nach einem der vorstehenden Ansprüche, **dadurch gekennzeichnet, dass** das expandierfähige Material (MA) ein Polymer ist und/oder ein Kunststoff und oder Kunstharz, insbesondere eine Polyurethanschaum ist.

9. Elektrische Maschine (EM) mit einem Rotor (RO) nach einem der vorstehenden Ansprüche.

10. Kraftfahrzeug (KFZ) mit einer elektrischen Maschine (EM) nach Anspruch 9.

11. Verfahren zur Herstellung eines Rotors (RO) nach einem der Ansprüche 1 bis 8, umfassend die Schritte:
- Bereitstellen eines Rotors (RO) mit einer Mehrzahl von zueinander beabstandet angeordneter Polzähne (PZ);
- Anordnung einer bestrombaren Rotorwicklung (RW) auf den jeweiligen Polzähnen (PZ);
- Einsetzen eines Nutkeils (NK) in eine Nut (NU) zwischen der Rotorwicklung (RW) zweier benachbarter Polzähne (PZ), wobei der Nutkeil (NK) auf einer der jeweiligen Rotorwicklung (RW) zugewandten Außenseite (AS) eine Schicht (ES) aus einem Elastomer aufweist, und die Rotorwicklung (RW) zumindest teilweise und/oder abschnittsweise in die Schicht (ES) aus dem Elastomer eingepresst wird wobei
- nach dem Einsetzen des Nutkeils (NK) in die Nut (NU) eine in Längsrichtung verlaufende Öffnung (OE) des Nutkeils (NK) mittels eines expandierfähigen Materials (MA) ausgefüllt wird, oder
- ein expandierfähiges Material (MA) vor der Anordnung des Nutkeils (NK) in der Nut (NU) bereits in der Öffnung (OE) angeordnet ist und erst nach dem Einsetzen des Nutkeils (NK) in die Nut (NU) aktiviert wird, wodurch das expandierfähige Material (MA) an Volumen zunimmt und sich in der Öffnung ausdehnt.

## Claims

1. Rotor (RO) for an externally excited electric machine (EM) of a motor vehicle (KFZ), comprising
an annular yoke (JO) with a yoke outer side (JAS) directed outward in the radial direction of the yoke (JO), wherein on the yoke outer side (JAS), a plurality of pole teeth (PZ) are arranged and/or formed spaced apart from one another in the circumferential direction of the yoke (JO),
each pole tooth (PZ) has a pole shaft (PST) and a pole shoe (PSH), wherein the pole shaft (PST) is formed between the yoke outer side (JAS) and the pole shoe (PSH), a rotor winding (RW) is arranged on each pole shaft (PST), and
a slot wedge (NK) is arranged in a slot (NU) between the rotor windings (RW) of two adjacent pole teeth (PZ),
**characterized in that**
on an outer side (AS) facing the respective rotor winding (RW), the slot wedge (NK) has a layer (ES) of an elastomer, against which the rotor winding (RW) bears at least partially and/or in portions, wherein
the slot wedge (NK) has a triangular and/or wedge-shaped base form in cross-section, wherein a tip (SP) of the wedge-shaped slot wedge (NK) points in the direction of the yoke outer side (JAS), a closed-edge opening (OE) runs through the slot wedge (NK) in the longitudinal direction of the rotor (RO), and
the opening (OE) is filled with an expandable material (MA) at least in portions, whereby the elastomer layer (ES) is pressed against the rotor winding (RW).

2. Rotor according to Claim 1, **characterized in that** the elastomer is a rubber material and/or comprises rubber at least in parts.

3. Rotor according to Claim 2, **characterized in that** the rubber material is an ethylene propylene diene rubber (EPDM) or a butyl rubber (IIR).

4. Rotor according to any of the preceding claims, **characterized in that** the opening (OE) has a substantially triangular cross-section.

5. Rotor according to any of the preceding claims, **characterized in that** the slot wedge (NK) is made of plastic.

6. Rotor according to any of the preceding claims, **characterized in that** a slot wedge end (NKE) of the slot wedge (NK) bears at least in portions against a pole shoe inner face (PIF).

7. Rotor according to any of the preceding claims, **characterized in that** the slot wedge (NK) has a widening (AW) on the side facing the yoke outer side (JAS), which at least in portions engages behind the inner side (IS) of the rotor winding (RW) facing the yoke outer side (JAS).

8. Rotor according to any of the preceding claims, **characterized in that** the expandable material (MA) is a polymer and/or a plastic and/or a synthetic resin, in particular a polyurethane foam.

9. Electric machine (EM) with a rotor (RO) according to any of the preceding claims.

10. Motor vehicle (KFZ) having an electric machine (EM) according to Claim 9.

11. Method for producing a rotor (RO) according to any of Claims 1 to 8, comprising the steps:
- provision of a rotor (RO) with a plurality of pole teeth (PZ) spaced apart from one another;
- arrangement of an energizable rotor winding (RW) on the respective pole teeth (PZ);
- insertion of a slot wedge (NK) in a slot (NU) between the rotor windings (RW) of two adjacent pole teeth (PZ), wherein the slot wedge (NK) has a layer (ES) of an elastomer on an outer side (AS) facing the respective rotor winding (RW), and the rotor winding (RW) is pressed into the elastomer layer (ES) at least in part and/or in portions, wherein
- after insertion of the slot wedge (NK) into the slot (NU), an opening (OE) of the slot wedge (NK) running in the longitudinal direction is filled with an expandable material (MA), or
- before the slot wedge (NK) is arranged in the slot (NU), an expandable material (MA) is already arranged in the opening (OE) and is only activated after the slot wedge (NK) has been inserted in the slot (NU), whereby the expandable material (MA) increases in volume and expands in the opening.

## Revendications

1. Rotor (RO) pour machine électrique (EM) à excitation séparée d'un véhicule à moteur (KFZ), comportant
une culasse (JO) de forme annulaire avec un côté extérieur de culasse (JAS) dirigé vers l'extérieur dans la direction radiale de la culasse (JO),
une multitude de dents polaires (PZ) étant disposées et/ou formées de manière espacée les unes par rapport aux autres dans la direction périphérique de la culasse (JO) sur le côté extérieur de la culasse (JAS),
chaque dent polaire (PZ) comportant un arbre polaire (PST) et un sabot polaire (PSH), l'arbre polaire (PST) étant formé entre le côté extérieur de culasse (JAS) et le sabot polaire (PSH),
un enroulement de rotor (RW) étant disposé sur chaque arbre polaire (PST), et
une cale de rainure (NK) étant disposée dans une rainure (NU) entre l'enroulement e rotor (RW) de deux dents polaires (PZ) adjacentes,
**caractérisé en ce que**
la cale de rainure (NK) sur un côté extérieur (AS) tourné vers l'enroulement de rotor (RW) respectif comporte une couche (ES) en élastomère contre laquelle l'enroulement de rotor (RW) repose au moins en partie et/ou par sections,
la cale de rainure (NK) comportant une forme de base triangulaire et/ou cunéiforme dans la section transversale, une pointe (SP) de la cale de rainure (NK) cunéiforme étant dirigée en direction du côté extérieur de culasse (JAS), une ouverture (OE) à bord fermé s'étendant à travers la cale de rainure (NK) dans la direction longitudinale du rotor (RO), et
l'ouverture (OE) étant remplie au moins par sections d'un matériau expansible (MA), ce qui permet de presser la couche (ES) en l'élastomère sur l'enroulement de rotor (RW).

2. Rotor selon la revendication 1, **caractérisé en ce que** l'élastomère est un matériau en caoutchouc et/ou comporte au moins en partie du caoutchouc.

3. Rotor selon la revendication 2, **caractérisé en ce que** le matériau en caoutchouc est un caoutchouc éthylène-propylène-diène (EPDM) ou un caoutchouc butyle (IIR).

4. Rotor selon l'une des revendications précédentes, **caractérisé en ce que** l'ouverture (OE) comporte dans la section transversale une configuration sensiblement triangulaire.

5. Rotor selon l'une des revendications précédentes, **caractérisé en ce que** la cale de rainure (NK) est formée à partir de matière plastique.

6. Rotor selon l'une des revendications précédentes, **caractérisé en ce qu'**une extrémité de cale de rainure (NKE) de la cale de rainure (NK) s'appuie au moins par sections contre une surface intérieure de patin polaire (PIF).

7. Rotor selon l'une des revendications précédentes, **caractérisé en ce que** la cale de rainure (NK) comporte, sur son côté tourné vers le côté extérieur de culasse (JAS), un élargissement (AW), qui vient en prise par l'arrière au moins par sections avec le côté intérieur (IS) de l'enroulement de rotor (RW) tourné vers le côté extérieur de culasse (JAS).

8. Rotor selon l'une des revendications précédentes, **caractérisé en ce que** le matériau expansible (MA) est un polymère et/ou une matière plastique et/ou une résine synthétique, en particulier une mousse de polyuréthane.

9. Machine électrique (EM) avec un rotor (RO) selon l'une des revendications précédentes.

10. Véhicule à moteur (KFZ) avec une machine électrique (EM) selon la revendication 9.

11. Procédé de fabrication d'un rotor (RO) selon l'une des revendications 1 à 8, comprenant les étapes :
- fourniture d'un rotor (RO) avec une multitude de dents polaires (PZ) disposées de manière espacée les unes par rapport aux autres ;
- disposition d'un enroulement de rotor (RW) pouvant être alimenté en courant sur les dents polaires (PZ) respectives ;
- insertion d'une cale de rainure (NK) dans une rainure (NU) entre l'enroulement de rotor (RW) de deux dents polaires (PZ) adjacentes, la cale de rainure (NK) comportant sur un côté extérieur (AS) tourné vers l'enroulement de rotor (RW) respectif une couche (ES) en un élastomère, et l'enroulement de rotor (RW) étant pressé au moins en partie et/ou par sections dans la couche (ES) en l'élastomère,
- après l'insertion de la cale de rainure (NK) dans la rainure (NU), une ouverture (OE) s'étendant dans la direction longitudinale de la cale de rainure (NK) étant remplie au moyen d'un matériau expansible (MA) ou
- un matériau expansible (MA) étant déjà disposé dans l'ouverture (OE) avant la disposition de la cale de rainure (NK) dans la rainure (NU) et n'étant activé qu'après l'insertion de la cale de rainure (NK) dans la rainure (NU), ce qui permet d'augmenter le volume du matériau expansible (MA) et de le dilater dans l'ouverture.
